# EUROPÄISCHE PATENTSCHRIFT

(11) **EP 0 421 080 B1**
(45) Veröffentlichungstag und Bekanntmachung des Hinweises auf die Patenterteilung: **30.03.1994**
(21) Anmeldenummer: 90114909.6
(22) Anmeldetag: 03.08.1990
(51) Int. Cl.: F01M 1/10, F01M 11/03

(54) **Flüssigkeitsfilter für das Schmieröl einer Brennkraftmaschine**
Liquid filter for the lubrication oil of an internal combustion engine
Filtre à liquide pour l'huile de lubrification d'un moteur à combustion interne

(30) Priorität: 04.10.1989 DE 3933059
(43) Veröffentlichungstag der Anmeldung: 10.04.1991
(73) Patentinhaber: FILTERWERK MANN & HUMMEL GMBH, D-71631 Ludwigsburg (DE)
(72) Erfinder: Mack, Klaus, D-7144 Asperg (DE); Pavlin, Jaroslav, D-7149 Freiberg (DE)
(74) Vertreter: Voth, Gerhard, Dipl.-Ing.

(56) Entgegenhaltungen:
- DE-A- 3 344 568
- DE-B- 1 152 285
- FR-A- 2 566 045
- US-A- 4 174 699

## Beschreibung

Die Erfindung betrifft ein Flüssigkeitsfilter für das Schmieröl einer Brennkraftmaschine nach dem Oberbegriff des Anspruchs 1 oder des Anspruchs 6. Mit derartigen Flüssigkeitsfiltern wird ein Auslaufen der Flüssigkeit beim Lösen des Gehäusedeckels dadurch verhindert, daß der Filtereinsatz, welcher durch den Deckel in seiner Einbaulage gehalten wird, mit dem Deckel nach außen bewegt wird und eine Absperrvorrichtung automatisch den Ablaßkanal freigibt, sodaß die in dem Filtergehäuse befindliche Flüssigkeit in einen Flüssigkeitssammelbehälter abfließen kann.

Die DE-OS 34 22 482 (Fam. von der FR-A-2 566 045) beschreibt ein derartiges Schmierölfilter. Eine Absperrvorrichtung ist dort in das Filtergehäuse integriert. Diese Absperrvorrichtung ist ein Kombinationsventil mit einem Absperr- und einem Kurzschlußventil. Es hat sich gezeigt, daß eine solche Absperrvorrichtung, die aus mehreren Ventilteilen, Federn usw. besteht, einen nicht unerheblichen Aufwand bei der Montage in das Filtergehäuse erfordert. Außerdem sind im Filtergehäuse verschiedene Dichtflächen vorzusehen, die mit der Absperrvorrichtung zusammenwirken müssen. Insgesamt ist daher dieses in dem Flüssigkeitsfilter angeordnete, bekannte Kombinationsventil eine fertigungstechnisch aufwendige Lösung.

Aus der EP A2 314 915 ist ein Flüssigkeitsfilter bekannt, welches ebenfalls einen Ablaßkanal für die Flüssigkeit beim öffnen des Gehäuses freigibt. Dieser Ablaßkanal kann durch einen Ventilkörper verschlossen werden, wobei dieser durch zwei eingelegte Druckfedern gestützt wird. Diese Lösung ist zwar weniger kostenaufwendig, es besteht jedoch bei dieser Anordnung die Gefahr, daß eine Feder verklemmt und ein Abdichten bei eingebautem Filtereinsatz nicht gewährleistet ist. Eine fehlende Abdichtung des Ablaßkanals kann dazu führen, daß der Motor nicht ausreichend mit öl versorgt wird.

Ein weiterer Nachteil dieser Anordnung ist darin zu sehen, daß eine genaue Abstimmung der Feder erforderlich ist, damit der Ventilkörper seine Funktion erfüllt. Außerdem muß auch hier das Filtergehäuse mit Dicht- und Befestigungsflächen ausgestattet werden, wodurch der Fertigungsaufwand erhöht wird.

Die bauliche Anordnung einer Ventilkombination ist weiterhin aus der DE-A 11 52 285 bekannt. Diese Anordnung zeigt eine Ventilkombination für ein Flüssigkeitsfilter, wobei zwei Ventile hintereinander an einem Gehäuse angebracht sind und wobei das Gehäuse in einer Ausnehmung des Motorblocks angebracht ist. Eine Wirkverbindung zwischen den beiden Ventilen ist nicht vorgesehen.

Es ist deshalb Aufgabe der vorliegenden Erfindung eine Absperrvorrichtung zu schaffen, welche funktionssicherer ist und in einfacher Weise, ohne erhöhten Fertigungsaufwand, in dem Filtergehäuse integriert werden kann, sowie den Ablaßkanal bei fehlendem Filtereinsatz verschließt.

Diese Aufgabe wird, ausgehend von dem Oberbegriff des Anspruchs 1, durch dessen kennzeichnenden Merkmale gelöst.

Ein wesentlicher Vorteil der Erfindung ist darin zu sehen, daß die Absperrvorrichtung eine kompakte Einheit darstellt, die außerhalb des Filtergehäuses gefertigt, montiert und überprüft werden kann.

Gerade die Überprüfung der Funktionsfähigkeit der Absperrvorrichtung läßt sich wesentlich einfacher an dem kompletten Bauteil vornehmen.

Die Montage der Absperrvorrichtung in das Filtergehäuse erfordert nur einen sehr geringen Zeitaufwand, außerdem sind in dem Filtergehäuse keine speziellen Dichtflächen oder Anschlußflächen für bestimmte Elemente der Absperrvorrichtung erforderlich.

Ein weiterer Vorteil der Erfindung ist darin zu sehen, daß bei einem eventuell auftretenden Defekt der Absperrvorrichtung, diese leicht ausgetauscht werden kann.

In einer Weiterbildung der Erfindung ist vorgesehen, in den Ventilkörper und damit in die Absperrvorrichtung ein Sicherheitsventil zu integrieren. Auch der Einbau dieses Sicherheitsventils ist durch den erfindungsgemäßen Aufbau der Absperrvorrichtung vereinfacht. Die Überprüfung des Sicherheitsventils auf den Maximaldruck ist durch die leichte Zugänglichkeit dieses Ventils außerhalb des Filtergehäuses besser möglich.

Nach einer weiteren vorteilhaften Ausgestaltung der Erfindung ist die Absperrvorrichtung auch in der Lage, trotz fehlendem Filtereinsatz den Ablaßkanal zu verschließen. Dies ist besonders dann zweckmäßig, wenn die Funktionsfähigkeit des Motors - zumindest kurzzeitig - auch ohne Filtereinsatz gegeben sein muß. Hierzu ist der Schubkolben mit einer ringförmigen Schulterfläche versehen, welche bei fehlendem Filtereinsatz an einer Dichtfläche des Ventilgehäuse anliegt und damit den Ablaßkanal gegenüber dem Filtergehäuse verschließt.

Auch die Funktionsfähigkeit dieses Ventils kann selbstverständlich vor der Montage der Absperrvorrichtung in das Filtergehäuse überprüft werden.

Die Absperrvorrichtung kann beispielsweise bei entsprechender Ausgestaltung des Filtergehäuses in dieses eingeschraubt werden. Selbstverständlich sind hier weitere Befestigungsarten denkbar, so auch das Einpressen oder Einkleben.

In einer Variante der erfindungsgemäßen Lösung ist vorgesehen, die axiale Beweglichkeit des Schubkolbens durch einen Bördelrand an dem Ventilgehäuse zu begrenzen.

Eine vorteilhafte Weiterbildung dieser Erfindung ist auch darin zu sehen, daß die Druckfeder so ausgelegt ist, daß sie zwar das Ventil in seine Offenstellung zuverlässig bewegen kann, gleichzeitig aber auch gewährleistet ist, daß bei einem Einbauen des Filtereinsatzes und damit einer Krafteinwirkung auf den Schubkolben, dieser Schubkolben den Ventilkörper über die stärkere Ausgleichfeder in die Schließstellung bewegt und das Ventil bei der normalen Betriebsart geschlossen bleibt.

Die Druckfeder ist weiterhin so ausgelegt, daß bei fehlendem Filtereinsatz und beim Ansteigen des öldruckes innerhalb des Filtratraumes das Ventil schließt, so daß auch bei fehlendem Filtereinsatz ein Betrieb des Motors, an welchem das Flüssigkeitsfilter angewendet wird, möglich ist.

Die Erfindung wird nachfolgend anhand eines Ausführungsbeispiels näher erläutert. Es zeigt
- Figur 1: die schematische Darstellung eines Flüssigkeitsfilters im Achsschnitt,
- Figur 2: eine Absperrvorrichtung in Detaildarstellung bei eingebautem Filtereinsatz,
- Figur 3: die Absperrvorrichtung während der Phase des Entfernens des Filtereinsatzes,
- Figur 4: die Absperrvorrichtung bei völlig entferntem Filtereinsatz.
- Figur 5: die schematische Darstellung einer weiteren Absperrvorrichtung.

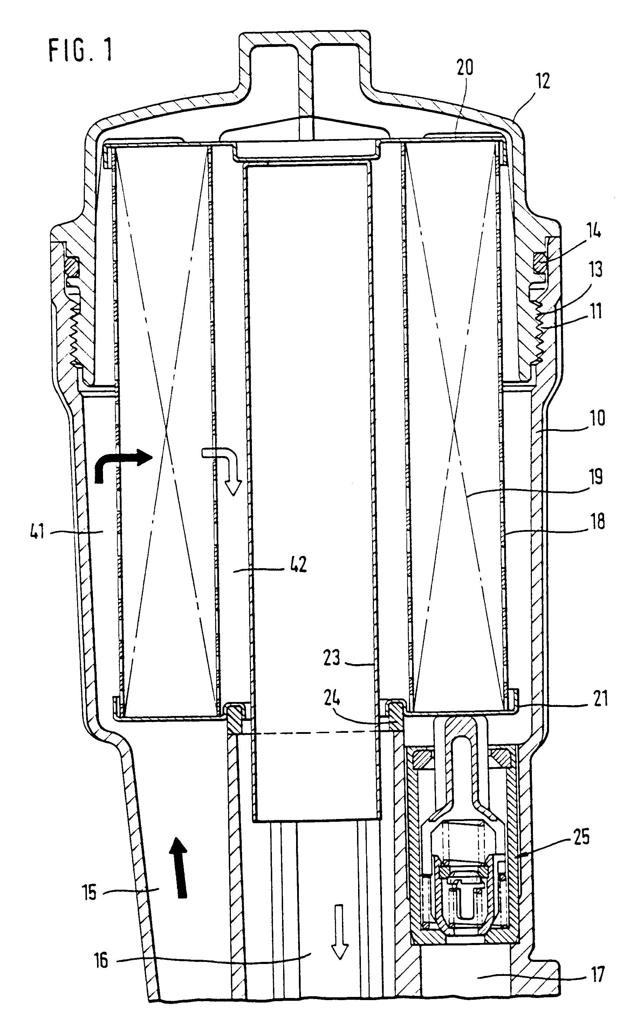

Das Flüssigkeitsfilter gemäß Figur 1, hat ein vertikal angeordnetes im wesentlichen zylindrisches Filtergehäuse 10, das am oberen offenen Ende mit einem Innengewinde 11 versehen ist. Ein abnehmbarer Gehäusedeckel 12 ist mit seinem Außengewinde 13 auf das Gewinde 11 des Filtergehäuses 10 aufgeschraubt und verschließt das Filtergehäuse 10 über einen Dichtring 14, der an der Innenfläche des Filtergehäuses 10 anliegt.

An seiner unteren Stirnseite ist das Filtergehäuse 10 mit einem Schmutzflüssigkeitskanal 15 für die Zufuhr der zu filternden Flüssigkeit, einem Filtratkanal 16 für die Ableitung der gefilterten Flüssigkeit und mit einem Ablaßkanal 17 versehen, der in einen hier nicht dargestellten Flüssigkeitssammelbehälter mündet. Bei Verwendung des Flüssigkeitsfilter für das Schmieröl ist dieser an die Ölwanne der Brennkraftmaschine angeschlossen.

Ein ringförmiger Filtereinsatz 18 besteht aus einem zick-zack förmig gefalteten und zu einem Ring zusammengefügten Filterpapierstern 19, der an seiner oberen Stirnseite durch eine angeklebte Endscheibe 20 und an seiner unteren Stirnseite durch einen angeklebten Abdeckring 21 verschlossen ist. Am unteren Ende greift ein rohrförmiges Innenteil 23 des Filtereinsatzes 18 in den Filtratkanal 16. Mit einer Dichtung 24, welche an dem Abdeckring 21 konzentrisch befestigt ist, wird der Filtratkanal gegenüber dem Schmutzflüssigkeitskanal abgedichtet. Der Ablaßkanal 17 ist mit einer Absperrvorrichtung 25 versehen, diese Absperrvorrichtung wird durch das Einbauen bzw. Entfernen des Filtereinsatzes 18 betätigt.
Der Aufbau und die Wirkunsweise dieser Absperrvorrichtung ist in den nachfolgenden Figuren näher erläutert.

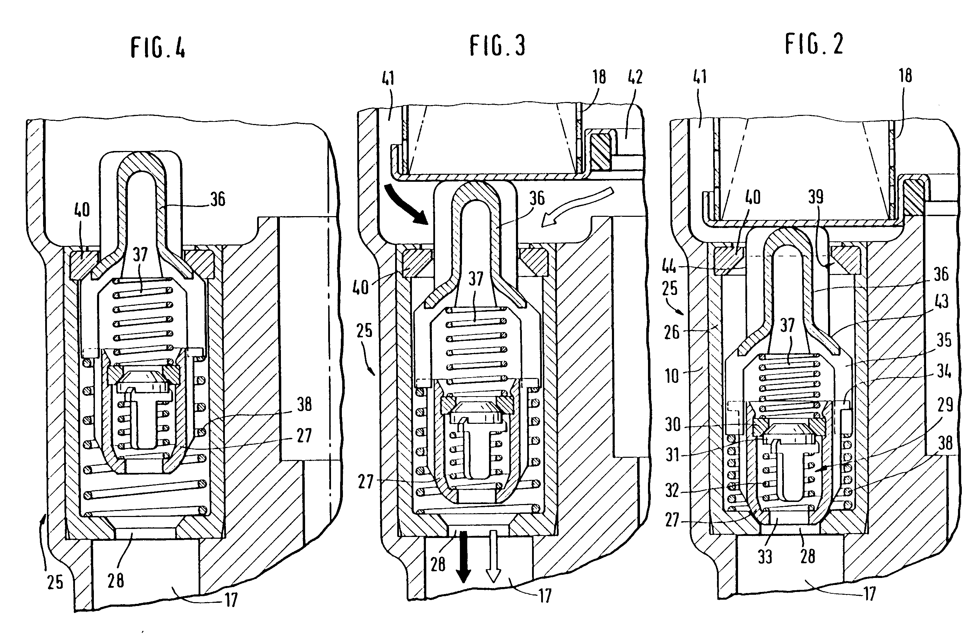

Wie in Figur 2 dargestellt, besteht die Absperrvorrichtung 25 aus einem Ventilgehäuse 26, welches in das Filtergehäuse 10 eingesetzt ist. In diesem Ventilgehäuse ist ein Ventilkörper 27 angeordnet welcher die untere Öffnung 28 des Ventilgehäuses 26 verschließen kann. In den Ventilkörper 27 ist ein Sicherheitsventil 29 integriert. Dieses Sicherheitsventil besteht aus einem Ventilsitz 30, einem Ventilkörper 31 und einer Druckfeder 32.

Der Ventilkörper 31 verschließt im Normalbetrieb, in Verbindung mit dem Ventilsitz 30, eine Sicherheitsöffnung 33 des Ventilkörpers 27.

Sollte aus bestimmten Gründen der Öldruck im Filtergehäuse über einen bestimmten Wert hinaus ansteigen, dann öffnet dieses Sicherheitsventil 29 solange, bis der Überdruck abgebaut ist.

Der Ventilkörper 27 greift mit radial nach außen gerichteten Nasen 34 in Längsführungen 35 eines Schubkolbens 36 ein. Dieser Schubkolben hat die Aufgabe, die Bewegung des Filtereinsatzes 18 auf den Ventilkörper 27 zu übertragen. Die axiale Bewegungskomponente des Schubkolbens 36 wird über eine Zwischenfeder 37, welche zum Ausgleich von Längendifferenzen dient, auf den Ventilkörper 27 geführt. Es ist weiterhin eine Feder 38 vorgesehen, welche sich an dem Ventilgehäuse 26 abstützt und eine nach oben gerichtete Kraft auf den Schubkolben 36 ausübt, sodaß der Schubkolben immer in Kontakt mit dem eingebauten Filtereinsatz 18 ist.

Zur Führung des Schubkolbens 36 innerhalb des Ventilgehäuses 26 besitzt dieser an seinem oberen Ende sternförmig angeordnete Führungsflächen 44. Im unteren Bereich stützt sich der Schubkolben 36 mit seiner Außenfläche an der Innenseite des Ventilgehäuses 26 ab.

An dem oberen Ende des Ventilgehäuses 26 befindet sich ein weiterer Ventilsitz 40, der mit einer Dichtfläche versehen ist. Dieser Ventilsitz 40 wirkt zusammen mit einer ringförmigen Schulter 43 des Schubkolbens 36. Die Funktion dieser Abdichtung wird weiter unten anhand der Figur 4 erläutert.

In Figur 2 befindet sich der Filtereinsatz 18 im eingebauten Zustand, das heißt, der Gehäusedeckel 12 ist aufgeschraubt und drückt den Filtereinsatz 18 in seine untere Endstellung. In diser Stellung drückt der Schubkolben 36 über die Zwischenfeder 37 den Ventilkörper 27 gegen die Öffnung 28 des Ventilgehäuses 26 und verschließt damit wirksam den Ablaßkanal 17 gegenüber dem Schmutzflüssigkeitsraum 41.

Mit dem Lösen des Gehäusedeckels 12 bewegt sich auch der Filtereinsatz 18 mittels der Feder 38 nach oben.

Figur 3 zeigt eine Stellung des Filtereinsatzes 18, in welcher der Gehäusedeckel zum Teil herausgeschraubt ist. In der gezeigten Stellung hat der Ventilkörper 27 die Öffnung 28 freigegeben, sodaß nunmehr die ungereinigte Flüssigkeit aus dem Schmutzflüssigkeitsraum 41 und die Flüssigkeit aus der Reinseite 42 ungehindert über den Ablaßkanal 17 abfließen kann. Dieses Abfließen geschieht sofort nach dem der Gehäusedeckel 12 soweit geöffnet ist, daß zwischen Gehäusedeckel und Gehäuse Luft einströmen kann und der Filtereinsatz 18 soweit nach oben abgehoben ist, daß die Öffnung 28 des Ablaßkanals 17 freigegeben ist. Bis der Deckel vollständig entfernt und der Filtereinsatz 18 entnommen werden kann ist die in dem Filtergehäuse befindliche Flüssigkeit restlost abgelaufen.

In Figur 4 ist die Absperrvorrichtung 25 bei entnommenem Filtereinsatz 18 gezeigt. Der fehlende Filtereinsatz bewirkt, daß die Feder 38 den Schubkolben 36 soweit nach oben bewegt, daß die schulterförmige Dichtfläche 43 des Schubkolbens an dem Ventilsitz 40 anliegt und nunmehr den Ablaßkanal 17 verschließt. Durch dieses Abdichten des Ablaßkanals gegenüber dem Innenraum des Filtergehäuses besteht die Möglichkeit, daß selbst bei fehlendem Filtereinsatz ein Betrieb des Motors möglich ist, das heißt auch in diesem Fall kann sich ein Flüssigkeitsdruck aufbauen, wobei dann zwar die Flüssigkeit nicht gefiltert wird, jedoch die Funktion des Flüssigkeitskreislaufes erhalten bleibt.

Selbstverständlich ist die Feder 38 so bemessen, daß jeder gewünschte Betriebsdruck der durch die Flüssigkeit in dem Filtergehäuse aufgebaut werden soll, das von dem Schubkolben gebildete Absperrventil nicht zu öffnen vermag.

Das Ventilgehäuse 26 kann außerhalb des Filtergehäuses 10 komplett montiert werden. Außerdem besteht auch die Möglichkeit, die Funktion der einzelnen Ventile, die in dem Ventilgehäuse angeordnet sind, vor dem Einbau in das Filtergehäuse 10 zu überprüfen. Die komplette Absperrvorrichtung kann durch die universelle Verwendbarkeit in großen Stückzahlen und damit kostengünstig hergestellt werden. Das Einsetzen dieser Absperrvorrichtung in das Filtergehäuse 10 erfolgt beispielsweise durch Einpressen, Einschrauben, Einrasten oder Einkleben.

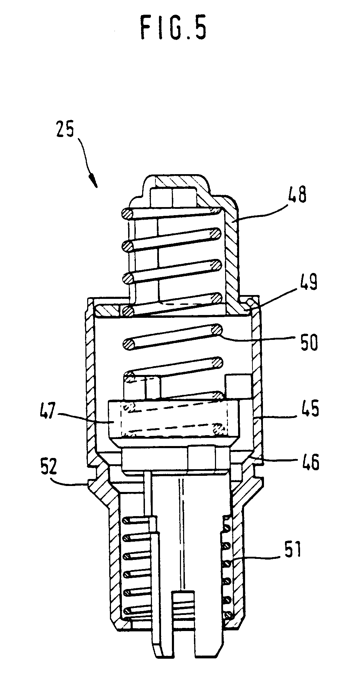

Die Absperrvorrichtung gemäß Figur 5 zeigt ein Ventilgehäuse 45, welches mit einem konisch ausgebildeten Ventilsitz 46 versehen ist. Innerhalb des Ventilgehäuses befindet sich ein Ventilkörper 47 sowie ein Schubkolben 48. Dieser Schubkolben stützt sich an seinem unteren Ende über eine Auskragung 49 an einer Innenfläche des Ventilgehäuses ab. Das Ventilgehäuse ist an seinem oberen Ende zumindest an drei Stellen umgebördelt, so daß die axiale Beweglichkeit des Schubkobens 48 begrenzt wird.

Zwischen dem Schubkolben 48 und dem Ventilkörper 47 ist eine Ausgleichsfeder 50 angeordnet. Diese Ausgleichsfeder ist als Druckfeder gestaltet. Eine weitere Druckfeder 51 befindet sich zwischen dem Ventilgehäuse 45 und dem Ventilkörper 47 auf der gegenüberliegenden Seite. Die Druckfeder 51 weist einen gegenüber der Feder 50 geringeren Federkoeffizienten auf. Die Federkraft dieser Druckfeder 51 ist ferner so bemessen, daß der Öldruck, der innerhalb des Filtratraums überlicherweise herrscht, das Ventil zu schließen vermag. Damit ist gewährleistet, daß selbst bei fehlendem Filtereinsatz eine Störung der Ölversorgung vermieden wird. Der Ventilkörper 47 weist an seinem unteren und oberen Ende Führungsflächen auf, die sich jeweils an Innenflächen des Ventilgehäuses 45 abstützen und somit den Ventilkörper 47 in seiner radialen Lage fixieren.

### Bezugszeichenliste

- 10: Filtergehäuse
- 11: Innengewinde
- 12: Gehäusedeckel
- 13: Außengewinde
- 14: Dichtring
- 15: Schmutzflüssigkeitskanal
- 16: Filtratkanal
- 17: Ablaßkanal
- 18: Filtereinsatz
- 19: Filterpapierstern
- 20: Endscheibe
- 21: Abdeckring
- 23: Innenventil
- 24: Dichtung
- 25: Absperrvorrichtung
- 26: Ventilgehäuse
- 27: Ventilkörper
- 28: Öffnung
- 29: Sicherheitsventil
- 30: Ventilsitz
- 31: Ventilkörper
- 32: Druckfeder
- 33: Sicherheitsöffnung
- 34: Nasen
- 35: Längsführungen
- 36: Schubkolben
- 37: Zwischenfeder
- 38: Feder
- 40: Ventilsitz
- 41: Schmutzflüssigkeitsraum
- 42: Reinseite
- 43: Schulter
- 44: Führungsflächen
- 45: Ventilgehäuse
- 46: Ventilsitz
- 47: Ventikörper
- 48: Schubkolben
- 49: Auskragung
- 50: Ausgleichsfeder
- 51: Druckfeder
- 52: Preßsitz-Fläche

## Patentansprüche

1. Flüssigkeitsfilter für die Reinigung von Schmieröl einer Brennkraftmaschine, mit einem Filtergehäuse, das durch einen abnehmbaren Deckel verschlossen ist, mit einem ringförmigen, radial durchströmten, zur Wartung herausnehmbaren Filtereinsatz, der in dem Filtergehäuse einen Schmutzflüssigkeitsraum von einem Filtratraum trennt, mit einem Schmutzflüssigkeitskanal für die Zufuhr der zu filternden Flüssigkeit, mit einem aus dem Filtergehäuse führenden, in einen Flüssigkeitssammelbehälter mündenden Ablaßkanal und mit einer dem Ablaßkanal zugeordneten Absperrvorrichtung, die beim Lösen des Gehäusedeckels und beim Entfernen des Filtereinsatzes den Ablaßkanal freigibt, wobei diese Absperreinrichtung ein erstes Ventil aufweist, welches über eine Feder den Ablaßkanal bei geschlossenem Gehäusedeckel und eingebautem Filtereinsatz verschließt, wobei die Absperrvorrichtung (25) von einem zylindrischen Ventilgehäuse (26) umgeben ist, und in dem Ventilgehäuse ein Ventilkörper (27) als erstes Ventil axial beweglich geführt ist, wobei dieser Ventilkörper über eine Ausgleichsfeder (37/50) und einen Schubkolben (36/48) durch den Filtereinsatz (18) betätigt wird und mit einem an dem Ventilgehäuse (10) angeordneten Ventilsitz (28) zusammenwirkt und somit den Ablaßkanal (17) verschließt, wobei der Schubkolben (36) in dem Gehäuse (26) geführt ist und eine Feder (38) vorgesehen ist, die sich einerseits an dem Gehäuse (26) abstützt und andererseits den Schubkolben (36) an den Filtereinsatz federnd andrückt, dadurch gekennzeichnet, daß das Ventilgehäuse in einer Ausnehmung des Filtergehäuses angebracht ist und daß bei fehlendem Filtereinsatz die Absperrvorrichtung den Ablaßkanal verschließt und eine Baueinheit bildet, die mit dem Ventilgehäuse aus dem Filtergehäuse herausnehmbar ist.

2. Flüssigkeitsfilter nach Anspruch 1, dadurch gekennzeichnet, daß in dem Ventilkörper (27) ein zweiter Ventilsitz (30) angeordnet ist und ein zweiter Ventilkörper (31) vorgesehen ist, welcher an diesem Ventilsitz anliegt und ein Sicherheitsventil (29) bildet.

3. Flüssigkeitsfilter nach Anspruch 1 oder 2, dadurch gekennzeichnet, daß der Schubkolben (36) eine ringförmige Schulter (43) aufweist, und an dem zylindrischen Gehäuse (26) eine Dichtfläche (39) vorgesehen ist, wobei nach vollständigem Entfernen des Filtereinsatzes (18) die ringförmige Schulter (43) an der Dichtfläche (39) anliegt und den Ablaßkanal (17) gegenüber dem Filtergehäuse (10) verschließt.

4. Flüssigkeitsfilter nach einem der vorherigen Ansprüche, dadurch gekennzeichnet, daß das zylindrische Gehäuse (26) der Absperrvorrichtung (25) in eine entsprechende Ausnehmung des Filtergehäuses (10) eingerastet oder eingeschraubt ist.

5. Flüssigkeitsfilter nach einem oder mehreren der Ansprüche 1,2 oder 3 dadurch gekennzeichnet, daß das zylindrische Gehäuse (26) der Absperrvorrichtung (25) in eine entsprechende Ausnehmung des Filtergehäuses (10) eingepresst oder eingeklebt ist.

6. Flüssigkeitsfilter nach einem der vorherigen Ansprüche dadurch gekennzeichnet, daß die Feder eine Druckfeder (51) ist, die auf den Ventilkörper (47) eine Kraft ausübt, die in Richtung des Filtereinsatzes wirkt.

7. Flüssigkeitsfilter nach einem der vorherigen Ansprüche dadurch gekennzeichnet, daß das Ventilgehäuse aus einem Aluminiumwerkstoff besteht und an seinem äußeren Umfang mit einer Preßsitz-Fläche (52) versehen ist zum Eipressen des Ventilgehäuses in den Ablaßkanal.

8. Flüssigkeitsfilter nach Anspruch 6 oder 7 dadurch gekennzeichnet, daß eine Ausgleichsfeder (50) vorgesehen ist, die gegenüber der Druckfeder (51) eine höhere Federkonstante aufweist.

9. Flüssigkeitsfilter nach einem der vorherigen Ansprüche 6 bis 8 dadurch gekennzeichnet, daß der Schubkolben (48) an einer Innenfläche des Ventilgehäuses (45) geführt ist und das Ventilgehäuse zur Begrenzung der axialen Bewegung des Schubkolbens (48) einen Bördelrand an seinem oberen Ende aufweist.

10. Ventil nach einem der vorherigen Ansprüche dadurch gekennzeichnet, daß der Ventilsitz (46) an der kegeligen Fläche einer zentrischen Bohrung des Ventilgehäuses (45) angeordnet ist, daß der Ventilkörper (47) eine leicht ballige Fläche aufweist, welche an der kegeligen Fläche der Bohrung anliegt.

## Claims

1. Liquid filter device for cleaning lubricating oil of an internal combustion engine, including a filter housing which is closed by a detachable cover, an annular, radially traversed filter insert which is removable for maintenance purposes and separates an unfiltered liquid chamber from a filtrate chamber in the filter housing, an unfiltered liquid conduit for supplying the liquid to be filtered, a discharge conduit which extends from the filter housing and terminates in a liquid storage vessel, and a shut-off means which is associated with the discharge conduit and exposes the discharge conduit when the housing cover is detached and the filter insert is removed, this shut-off means having a first valve which seals the discharge conduit via a spring when the housing cover is closed and the filter insert is installed, the shut-off means (25) being surrounded by a cylindrical valve housing (26), and a valve body (27) being guided in an axially displaceable manner in the valve housing as the first valve, this valve body being actuated by the filter insert (18) via a compensating spring (37/50) and a thrust piston (36/48) and co-operating with a valve seat (28), which is disposed on the valve housing (10) and hence sealing the discharge conduit (17), the thrust piston (36) being guided in the housing (26), and a spring (38) being provided which, on the one hand, is supported on the housing (26) and, on the other hand, presses the thrust piston (36) resiliently against the filter insert, characterised in that the valve housing is mounted in a recess in the filter housing, and in that, if a filter insert is missing, the shut-off means seals the discharge conduit and forms a structural unit which is removable from the filter housing with the valve housing.

2. Liquid filter device according to claim 1, characterised in that a second valve seat (30) is disposed in the valve body (27), and a second valve body (31) is provided, which abuts against this valve seat and forms a safety valve (29).

3. Liquid filter device according to claim 1 or 2, characterised in that the thrust piston (36) has an annular shoulder (43), and a sealing surface (39) is provided on the cylindrical housing (26), the annular shoulder (43) abutting against the sealing surface (39) after the complete removal of the filter insert (18) and sealing the discharge conduit (17) relative to the filter housing (10).

4. Liquid filter device according to one of the preceding claims, characterised in that the cylindrical housing (26) of the shut-off means (25) is locked or screwed into an appropriate recess in the filter housing (10).

5. Liquid filter device according to one or more of claims 1, 2 or 3, characterised in that the cylindrical housing (26) of the shut-off means (25) is pressed or glued into an appropriate recess in the filter housing (10).

6. Liquid filter device according to one of the preceding claims, characterised in that the spring is a compression spring (51), which exerts a force upon the valve body (47), such force acting in the direction towards the filter insert.

7. Liquid filter device according to one of the preceding claims, characterised in that the valve housing is formed from an aluminium material and is provided on its external periphery with a press-fit surface (52) for pressing the valve housing into the discharge conduit.

8. Liquid filter device according to claim 6 or 7, characterised in that a compensating spring (50) is provided, which has a higher resilience constant than the compression spring (51).

9. Liquid filter device according to one of the preceding claims 6 to 8, characterised in that the thrust piston (48) is guided on an internal surface of the valve housing (45), and the valve housing has a beaded edge at its upper end to define the axial movement of the thrust piston (48).

10. Valve according to one of the preceding claims, characterised in that the valve seat (46) is disposed on the tapering face of a central bore in the valve housing (45), and in that the valve body (47) has a slightly spherical surface which abuts against the tapering face of the bore.

## Revendications

1. Filtre à liquide pour l'épuration de l'huile de graissage d'un moteur à combustion interne, comprenant un boîtier de filtre fermé par un couvercle qu'on peut enlever, une cartouche de filtre de forme annulaire, à écoulement radial, que l'on peut extraire pour l'entretien, et qui sépare dans le boîtier du filtre un espace réservé au liquide sale d'une chambre de filtrat, avec un canal pour le liquide sale servant à l'alimentation du liquide à filtrer, avec un canal d'évacuation sortant du boîtier de filtre, débouchant dans un réservoir collecteur de liquide et avec un dispositif d'obturation associé au canal d'évacuation, qui quand on libère le couvercle du boîtier et quand on enlève la cartouche filtrante libère le canal d'évacuation, ce dispositif d'obturation présentant une première vanne, qui ferme au moyen d'un ressort le canal d'évacuation quand le couvercle du boîtier est fermé et quand la cartouche filtrante est montée, filtre dans lequel le dispositif d'obturation (25) est entouré d'un boîtier cylindrique de vanne (26) et un corps de vanne (27) dans le boîtier de vanne est mis en mouvement axialement comme première vanne, ce corps de vanne étant actionné par l'intermédiaire d'un ressort d'équilibrage (37/50) et d'un piston poussoir (36/48) à travers la cartouche filtrante (18) et coopérant avec un siège de soupape (28) disposé sur le boîtier de vanne (10) et fermant ainsi le canal d'évacuation (17), le piston poussoir (36) étant guidé dans le boîtier (26) et un ressort (38) étant prévu, qui s'appuie d'une part sur le carter (26) et d'autre part presse de façon élastique le piston poussoir (36) sur la cartouche du filtre, caractérisé en ce que le boîtier de soupape est disposé dans un évidement du boîtier du filtre et en ce que quand la cartouche du filtre manque le dispositif d'obturation ferme le canal d'évacuation et forme une unité de construction, qui peut être extraite avec le boîtier de vanne du boîtier du filtre.

2. Filtre pour liquide selon la revendication 1, caractérisé en ce que l'on dispose dans le corps de vanne (27) un deuxième siège de soupape (30) et l'on prévoit un deuxième corps de soupape (31), qui repose sur ce siège de soupape et constitue une soupape de sécurité (29).

3. Filtre pour liquide selon la revendication 1 ou 2, caractérisé en ce que le piston poussoir (36) présente un épaulement annulaire (43) et en ce qu'on prévoit sur le boitier cylindrique (26) une surface d'étanchéité (39), l'épaulement annulaire (43) reposant sur la surface d'étanchéité (39) après qu'on ait complètement enlevé la cartouche filtrante (18) et fermé le canal d'évacuation (17) par rapport au boîtier du filtre (10).

4. Filtre pour liquide selon l'une des revendications précédentes, filtre caractérisé en ce que le boîtier cylindrique (26) du dispositif d'obturation (25) est encliqueté ou vissé dans un évidement correspondant du boîtier du filtre (10).

5. Filtre pour liquide selon une ou plusieurs des revendications 1, 2 ou 3, caractérisé en ce que le boîtier cylindrique (26) du dispositif d'obturation (25) est enfoncé par pressage dans un évidement correspondant du boîtier du filtre (10) ou est collé dedans.

6. Filtre pour liquide selon l'une des revendications précédentes, caractérisé en ce que le ressort est un ressort de compression (51), qui exerce une force sur le corps de vanne (47), qui agit dans le sens de la cartouche de filtration.

7. Filtre pour liquide selon l'une des revendications précédentes, caractérisé en ce que le boîtier de la vanne est en aluminium et est pourvu sur son pourtour extérieur d'une surface (52) pour le siège de compression servant à enfoncer par pressage le boîtier de la vanne dans le canal d'évacuation.

8. Filtre pour liquide selon la revendication 6 ou 7, caractérisé en ce que l'on prévoit un ressort d'équilibrage (50), qui présente par rapport au ressort de compression (51) une constante d'élasticité plus élevée.

9. Filtre pour liquide selon l'une des revendications précédentes 6 à 8, caractérisé en ce que le piston poussoir (48) est guidé sur une face intérieure du boîtier de vanne (45) et le boîtier de vanne présente pour limiter le mouvement axial du piston poussoir (48) un bord replié à son extrémité supérieure.

10. Vanne selon l'une des revendications précédentes, caractérisée en ce que le siège de soupape (46) est disposé sur la surface conique d'un perçage central du boîtier de la vanne (45), en ce que le corps de la vanne (47) présente une surface légèrement bombée, qui repose sur la surface conique du perçage.
